# EUROPÄISCHE PATENTSCHRIFT

(11) **EP 4 169 705 B1**
(45) Veröffentlichungstag und Bekanntmachung des Hinweises auf die Patenterteilung: **17.12.2025**
(21) Anmeldenummer: 22188668.2
(22) Anmeldetag: 04.08.2022
(51) Int. Cl.: B32B 1/08, B32B 9/04, B32B 9/06, B32B 15/04, B32B 15/20, B32B 29/00, B65D 41/62

(54) **ANFALTBARE SEKTFLASCHENKAPSEL**
COLLAPSIBLE BOTTLE CAPSULE FOR SPARKLING WINE
CAPSULE PLIABLE DE BOUTEILLE DE VIN MOUSSEUX

(30) Priorität: 21.10.2021 EP 21203896
(43) Veröffentlichungstag der Anmeldung: 26.04.2023
(73) Patentinhaber: Folien + Druck GmbH, 35463 Fernwald-Steinbach (DE)
(72) Erfinder: LANG, Christoffer, 35463 Fernwald-Steinbach (DE)
(74) Vertreter: Jeck, Jonathan

(56) Entgegenhaltungen:
- DE-A1- 2 927 510
- DE-A1- 4 011 307
- DE-T2- 69 403 525
- DE-U1- 9 107 929
- US-A- 3 009 593

## Beschreibung

Die vorliegende Erfindung betrifft eine anfaltbare Flaschenhalskapsel gemäß dem Oberbegriff des Anspruchs 1.

Eine solche Flaschenhalskapsel besteht aus einem mehrschichtigen Flachmaterial nach dem Verbundfolienaufbau und bildet üblicherweise den optischen Abschluss der Verschlusselemente von gekorkten Flaschen. Eine Verschlussfunktion übernimmt die Flaschenhalskapsel dabei grundsätzlich nicht.

Aus dem Stand der Technik sind mehrschichtige Verbundmaterialien zur Herstellung von Flaschenhalskapseln, beispielsweise aus Al-PE-Al, bekannt, welche in einem automatisierten Prozess an dem Flaschenhals angeordnet und anschließend um diesen herum gefaltet werden.

Dabei haben diese Verbundmaterialien mehrere Nachteile, wie beispielsweise die Neigung beim Falten am Flaschenhals zu reißen oder unerwünschte Querfalten während des Faltprozesses am Flaschenhals zu bilden.

Aus der DE 2927510 geht eine Verbundfolie mit insgesamt 5 Schichten und einem Lack-Aluminium-Lack-Kaschierwachs-Papier Aufbau hervor. Eine Kreppung des Papiers, ein Weichglühen der Al-Folie sowie die Bruchfähigkeit der Wachsschicht werden nicht gelehrt.

US 3,009,593 lehrt eine laminierte Abdeckung für Kronkorken und zugehörigen Flaschenhals, welche eine Schichtstruktur mit einer Metallfolie und einer Papierschicht aufweist. Als Adhäsiv wird eine Wachsverbindung "wachs compound" vorgeschlagen. Zur Verbesserung der Lösbarkeit von zwei ineinander angeordneten Kapseln beim Lagern und Stapeln wird vorgeschlagen, die gesamte Schichtstruktur zu prägen (Fig. 8) und dadurch die sich gegenseitig berührende Oberfläche von zwei Flachmaterialien zu verringern. Eine Kreppung des Papiers, ein Weichglühen der Al-Folie, eine flache Al-Folie sowie die Bruchfähigkeit der Wachsschicht werden nicht gelehrt.

EP 78671 betrifft eine Schutzkapsel zum Ummanteln eines Flaschenhalses, welche mit einer Prägung im Reliefdruck (S. 1, Abs. 5) bereitgestellt sein soll. Dazu wird eine Schürze 6 vorgeschlagen, welche aus Aluminium, Zinn, PVC, Polystyrol, Polypropylen, Polyester, gegebenenfalls aus Bändern zusammengesetzten Material, gestrichenen Papieren, Zusammensetzungen mit Hilfe von Wachsen mit Mikrokristallinen oder Polyolefinen, sein können. Eine Sektflaschenkapsel bestehend aus einer weichgeglühten glatten Al-Folie, bruchfähigem Wachs und gekrepptem Papier wird nicht offenbart.

DE 91 07 929 U1 offenbart eine Flaschenhalskapsel in Form eines Verbunds von ungekrepptem Trägerpapier und einer Aluminiumschicht. Die Aluminiumschicht wird durch Aufdampfen auf dem Trägerpapier festgelegt und weist dabei eine Schichtdicke von 10-20 nm auf. Es handelt sich demnach im Grunde um beschichtetes Papier, bei welchem die Aluminiumschicht, aufgrund der geringen Dicke, bei der Frage der Dehnbarkeit der Kapsel und anderen physikalischen Eigenschaften keine messbare Rolle spielt. Das Aufdampfen einer extrem dünnen Aluminiumschicht hat gegenüber einer Verbindung von zwei separaten flächigen Materialien u.a. den Nachteil, dass die Oberflächenstruktur des Papiers von der Aluminiumschicht übernommen wird und so eine glatte Oberfläche des Aluminiums verhindert ist. Auch die Faltbarkeit der Kapsel um den Flaschenhals ist im vorliegenden Fall eingeschränkt, da kein Material in ausreichender Menge bereitgestellt ist, welche die dauerhafte Formfestigkeit eines Falzes bereitstellen könnte. Eine Sektflaschenkapsel bestehend aus einer weichgeglühten glatten Al-Folie, bruchfähigem Wachs und gekrepptem Papier wird nicht offenbart.

Aus der DE 40 11 307 A1 ist eine Flaschenhalsausstattung in Form einer folienartigen, bedruckten Umhüllung für den Flaschenhals und gegebenenfalls den Flaschenverschluss, insbesondere für Bierflaschen, ist zur Erzielung einer umweltfreundlichen Ausgestaltung bei gleichwohl ansprechendem Erscheinungsbild vorgesehen, daß sie durch ein volumiges Papier gebildet ist.

Die vorliegende Erfindung stellt sich die Aufgabe, eine Sektflaschenkapsel bereitzustellen, welche die aus dem Stand der Technik bekannten Nachteile überwindet und dabei die Besonderheit erfüllt, dass die bei einer Sektflasche übliche Faltung mit Vorfaltung der Kapsel am Flaschenhals trotz der dabei unüblichen Verwendung von Papier erhalten bleibt und der Verbund aus Papier und Aluminium trotz der beim Falten auftretenden Materialveränderungen keine strukturellen Schäden, z. B. in Form von Rissen in der Al- oder Papierfolie, nimmt.

Die Aufgabe wird nach der vorliegenden Erfindung durch eine Sektflaschenkapsel bestehend aus einem mehrschichtigen Flachmaterial mit einer Außenseite und einer Innenseite, gelöst, wobei die Außenseite eine glatte, weichgeglühte Aluminiumfolie aufweist, die Innenseite eine gekreppte Zellstoffschicht, insbesondere ein Zellstoffflachwerk, aufweist und, dass zwischen der Innenseite und der Außenseite eine bruchfähige Wachsschicht bereitgestellt ist.

Überraschenderweise konnte festgestellt werden, dass die erfindungsgemäße Kombination von 3 Schichten aus gekrepptem Papier, bruchfähigem Wachs und einer weichgeglühten Aluminiumfolie eine synergetische Wirkung hinsichtlich mehrerer Eigenschaften der Flaschenhalskapsel herbeiführt. Bruchfähigkeit kann nach der vorliegenden Erfindung insbesondere bedeuten, dass der beim Vor- und Anfaltprozess der Kapsel auf den Flaschenhals gebildete Falz nicht mehr in den ursprünglichen, ungefalteten Zustand überführbar ist, also die Materialtrennung (Bruch) im Wachs am Falz irreversibel ist.

Das Anfalten kann als Prozess des geordneten und gezielten Bildens von individuellen Falten der Flaschenkapsel um den Flaschenhals bezeichnen, wodurch ein besonders aufgeräumter und ordentlicher Gesamteindruck der Flaschenkapsel bereitgestellt ist.

Die Elastizität der gekreppten Papierschicht beugt einem Reißen der Kapsel während des Faltvorgangs an den Flaschenhals vor, wobei ein Bruch in der Wachsschicht beim Falten der Flaschenhalskapsel die Aluminiumfolie darin unterstützt, das Faltmuster aufrechtzuerhalten und eine Rückverformung der Kapsel aus einem gefalteten Zustand vorbeugen kann.

Weiterhin sorgt insbesondere die Elastizität der Papierschicht und der Aluminiumfolie dafür, dass unerwünschte Querfalten beim Anlegen der Kapsel an den Flaschenhals vermindert werden, beziehungsweise erst gar nicht auftreten.

Dabei konnte weiter festgestellt werden, dass die Maschinengängigkeit der erfindungsgemäßen Flaschenhalskapsel so nahe an den üblichen Verbundmaterialien liegt, dass ein Wechsel zwischen den Materialien ohne Neujustierung der eingesetzten Vorrichtungen ermöglicht ist.

Grundsätzlich lässt sich das mehrschichtige Flachmaterial nach der vorliegenden Erfindung durch unterschiedliche Papiere (Zellstoffe) und/oder Aluminiumsorten und/oder -legierungen bereitstellen, sofern die erfindungsgemäßen Bedingungen und Vorteile gegeben sind.

Nach einer bevorzugten Weiterbildung der vorliegenden Erfindung können folgende Zellstoffvarianten verwendet werden:

### Frischfaser- und/oder Recyclingzellstoff.

Vorzugsweise kann das Papier bzw. der Zellstoff, vorzugsweise durchgehend oder weitestgehend, also zumindest 90 % seiner Fläche, gekreppt sein und/oder einen Feinkrepp mit vorzugsweise min. 10 % Kreppung aufweisen. Feinkrepp kann als ein Zellstoff mit einer Kreppung von min. 10 % verstanden werden, bei welchem also die Oberfläche durch den Kreppvorgang um mindestens 10 % gegenüber dem glatten Ausgangsmaterial verringert ist.

Besonders bevorzugt ist die Kreppstruktur, welche auch als Fassadenputzstruktur oder Rauh-Plessir-Kreppstruktur bezeichnet werden kann, auch im finalen Produkt zu erkennen und kann zur Faltenarmen und Rissarmen Maschinengängigkeit des erfindungsgemäßen Flachmaterials beitragen. Die beim Anfalten von Sektflaschenkapseln auftretenden Biegungen an dessen Flügeln werden durch das sich ausdehnende Kreppmaterial und die dehnbare, weichgeglühte Al-Folie ausgeglichen, wobei der Wachsbruch zwischen den Schichten dazu beitragen kann, die klare Kante des gebildeten Falzes aufrecht zu erhalten.

Eine Kreppung des mehrschichtigen Flachmaterials nach dessen Zusammenfügen, kann zum Bruch der Al-Folie führen.

Eine Al-Folie nach der vorliegenden Erfindung ist vorzugsweise mit einer Dicke von 20-30 µm bereitgestellt und unterscheidet sich somit in seiner Dicke etwa um das 1000fache von einer aufgedampften Al-Schicht.

Das Anfalten der Sektflaschenkapsel nach der vorliegenden Erfindung kann darin bestehen, dass die für eine Sektflasche übliche Anpassung an den Flaschenhals in zwei Schritten erfolgt.

Zunächst wird üblicher Weise das Kapselmaterial möglichst faltenfrei an den Flaschenhals angelegt, wobei ein Materialüberschuss in Form von mehreren Flügeln in Längsrichtung der Flasche ausgebildet wird. Diese werden dann in einem zweiten Schritt an den Flaschenhals angelegt, wobei möglichst scharfe Knicke an den Flügelansätzen in das Kapselmaterial eingebracht werden, um die Flügel nah und flächig auf dem darunter befindlichen Kapselmaterial abzulegen. Sowohl beim flächigen Anlegen der Kapsel am Flaschenhals (Vorfaltung) also auch beim Anlegen der überstehenden Flügel wirken signifikant Dehn- und Biegekräfte auf das Kapselmaterial. Die erfindungsgemäße Kombination der dehnbaren Al-Folie, der bruchfähigen Wachsschicht und der anpassbaren Kreppschicht ermöglichen die Bereitstellung einer Sektflaschenkapsel mit vermindertem Al-Anteil gegenüber herkömmlichen Sektflaschenkapseln. Vorzugsweise weist die Al-Folie mindestens eine Dehnbarkeit von 8% auf.

Die Papierschicht und die Al-Folie können nach der vorliegenden Erfindung mittels eines Walzenauftragsverfahren, wie beispielsweise dem Semiflexo-Verfahren zusammenfügt sein.

Im Material der Sektflaschenkaspel können bereichsweise oder verteilt Entlüftungslöcher vorgesehen sein, welche einem blasen- und (schrumpel)faltenarmen/freien Anschmiegen während der Vorfaltung zuträglich sein können. Darunter sind Falten und Blasen zu verstehen, welche ungewollt entstehen und nicht zu der Optik der angelegten Flügel gehören, sondern vielmehr schon im ersten Schritt (Vorfaltung) im Kontaktbereich von Kapsel und Flaschenhals entstehen können.

Als Krepp kann im Rahmen des üblichen Sprachgebrauchst ein Zellstoff verstanden werden, welcher einer durch Faltung erhöhte Grammatur gegenüber einem glatten Zellstoff derselben Raumdichte und/oder Blattstärke aufweist.

Gekreppter Zellstoff/Papier kann insbesondere durch seine durch Faltung/Raffung erreichte Rauigkeit und/oder seine zugbedingte flexible Längenanpassung in zumindest einer Raumrichtung charakterisiert werden. Diese ist deutlich von einer Prägung zu unterscheiden, welche zwar eine optische Veränderung des Papiers bewirkt, jedoch keine Verbesserung der Zug- und Dehnfähigkeit des Papiers bereitstellt.

Nach einer zweckmäßigen Weiterbildung der vorliegenden Erfindung können die Wachse bei der Herstellung des erfindungsgemäßen mehrschichtigen Flachmaterials der Sektflaschenkapsel eingesetzt werden. Das bruchfähige Wachs nach der vorliegenden Erfindung unterscheidet sich von einer Kaschierklebeschicht insbesondere dadurch, dass es sich bei letzterem um einen Reaktivklebestoff oder einen Lösemittelkleber handelt. Eine Bruchfähigkeit ist einem solchen Adhäsiv nicht zu eigen. Auch ist die Bruchfähigkeit keine generell inhärente Eigenschaft aller Wachse. Für besonders vorteilhafte Brucheigenschaften kann das Wachs mit folgenden Parametern bereitgestellt sein:

| **Parameter** | **Wert** | **Einheit** |
|---|---|---|
| Nadel-Penetration (DIN 51579:2010-03, bei 25°C) | ca. 28 | ein Skalenteil entspricht 0,1 mm |
| Viskosität (DIN 52007-2:2013-10, bei 98,9°C) | ca. 220 | mPa·s |

Vorzugsweise ist das Penetrometer zur Bestimmung der Bruchfähigkeit so eingerichtet, dass
die Ableseeinrichtung in Skalenteilen (ein Skalenteil entspricht 0,1 mm) kalibriert ist und einen Bereich von 0 Skalenteilen bis mindestens 250 Skalenteile umfasst.

Nach einer Weiterbildung der vorliegenden Erfindung können die Aluminiumsorten und/oder -Legierungen eingesetzt werden, welche eine Zugfestigkeit von 7-9 kg/mm² und/oder eine Bruchdehnung von ≤ 4,5 %, vorzugsweise 3,5 %, insbesondere in Maschinenlaufrichtung und/oder ≤ 4,0 %, vorzugsweise 3,0 %, insbesondere quer zur Maschinenlaufrichtung aufweisen.

## Patentansprüche

1. Anfaltbare Sektflaschenkapsel bestehend aus einem mehrschichtigen Flachmaterial mit einer Außenseite und einer Innenseite,
**dadurch gekennzeichnet**
**dass** die Außenseite eine glatte, weichgeglühte Aluminiumfolie aufweist,
**dass** die Innenseite eine gekreppte Zellstoffschicht, insbesondere ein Zellstoffflachwerk, aufweist und
**dass** zwischen der Innenseite und der Außenseite eine bruchfähige Wachsschicht bereitgestellt ist.

2. Anfaltbare Sektflaschenkapsel nach Anspruch 1
**dadurch gekennzeichnet,**
**dass** die gekreppte Struktur min. 5 % Kreppung, vorzugsweise min. 10 % Kreppung, aufweist.

3. Anfaltbare Sektflaschenkapsel nach Anspruch 1 oder 2
**dadurch gekennzeichnet,**
**dass** die Zellstoffschicht ein Gewicht von min. 25 g/m², vorzugsweise 30 g/m², und/oder eine Dicke von min. 40 µm, vorzugsweise min. 80 µm, besonders bevorzugt 80-130 µm und bevorzugt 100 µm aufweist.

4. Anfaltbare Sektflaschenkapsel nach Anspruch 2,
**dadurch gekennzeichnet,**
**dass** der Zellstoff ein Feinkrepp, also ein Zellstoff mit einer Kreppung von min. 10 %, ist.

5. Anfaltbare Sektflaschenkapsel nach Anspruch 2
**dadurch gekennzeichnet,**
**dass** die gekreppte Struktur mindestens mind. 7 % Kreppung, vorzugsweise in mindestens einer Richtung entlang einer Papierebene aufweist.

6. Anfaltbare Sektflaschenkapsel nach einem der voranstehenden Ansprüche,
**dadurch gekennzeichnet,**
**dass** diese ohne adhäsiv- oder Klebstoffe an einem Flaschenhals anfaltbar und festlegbar ist.

## Claims

1. Foldable sparkling wine bottle capsule consisting of a multi-layered flat material with an outer side and an inner side,
**characterized in that**
the outer side has a smooth, soft-annealed aluminum foil,
the inner side has a creped cellulose layer, in particular a cellulose flat material, and
a breakable wax layer is provided between the inner side and the outer side.

2. Foldable sparkling wine bottle capsule according to claim 1
**characterized in that**
the creped structure has a minimum of 5% crepe, preferably a minimum of 10% crepe.

3. Foldable sparkling wine bottle capsule according to claim 1 or 2
**characterized in that**
the cellulose layer has a weight of at least 25 g/m², preferably 30 g/m², and/or a thickness of at least 40 µm, preferably at least 80 µm, particularly preferably 80-130 µm and preferably 100 µm.

4. Foldable sparkling wine bottle capsule according to claim 2,
**characterized in that**
the cellulose is a fine crepe, i.e., a cellulose with a crepe of at least 10%.

5. Foldable sparkling wine bottle capsule according to claim 2
**characterized in that**
the creped structure has at least 7% crepe, preferably in at least one direction along a paper plane.

6. Foldable sparkling wine bottle capsule according to any of the preceding claims, **characterized in that** it can be folded and fixed to a bottle neck without adhesives or glues.

## Revendications

1. Capsule pliable pour bouteille de vin mousseux constituée d'un matériau plat multicouche avec un côté extérieur et un côté intérieur,
**caractérisée en ce que**
le côté extérieur comporte une feuille d'aluminium lisse et recuite,
le côté intérieur comporte une couche de cellulose crêpée, en particulier un matériau plat en cellulose, et
une couche de cire cassable est prévue entre le côté intérieur et le côté extérieur.

2. Capsule pliable pour bouteille de vin mousseux selon la revendication 1
**caractérisée en ce que**
la structure crêpée a un minimum de 5% de crêpage, de préférence un minimum de 10% de crépage.

3. Capsule pliable pour bouteille de vin mousseux selon la revendication 1 ou 2
**caractérisée en ce que**
la couche de cellulose a un poids d'au moins 25 g/m², de préférence 30 g/m², et/ou une épaisseur d'au moins 40 µm, de préférence au moins 80 µm, plus particulièrement préférablement 80-130 µm et de préférence 100 µm.

4. Capsule pliable pour bouteille de vin mousseux selon la revendication 2,
**caractérisée en ce que**
la cellulose est un crêpe fin, c'est-à-dire une cellulose avec un crêpage d'au moins 10%.

5. Capsule pliable pour bouteille de vin mousseux selon la revendication 2
**caractérisée en ce que**
la structure crêpée a au moins 7% de crêpage, de préférence dans au moins une direction le long d'un plan du papier.

6. Capsule pliable pour bouteille de vin mousseux selon l'une quelconque des revendications précédentes, **caractérisée en ce qu'**elle peut être pliée et fixée au goulot d'une bouteille sans adhésif ni colle.
